# EUROPÄISCHE PATENTSCHRIFT

(11) **EP 1 230 525 B1**
(45) Veröffentlichungstag und Bekanntmachung des Hinweises auf die Patenterteilung: **08.10.2003**
(21) Anmeldenummer: 99939747.4
(22) Anmeldetag: 23.01.1999
(51) Int. Cl.: F41H 5/013

(54) **PANZERUNGSELEMENT, INSBESONDERE FÜR SICHERHEITSKRAFTFAHRZEUGE**
ARMORING ELEMENT, ESPECIALLY FOR SECURITY VEHICLES
ELEMENT DE BLINDAGE, EN PARTICULIER POUR VEHICULES DE SECURITE

(30) Priorität: 29.01.1998 DE 19803436; 13.01.1999 DE 19900716
(43) Veröffentlichungstag der Anmeldung: 14.08.2002
(73) Patentinhaber: AUDI AG, 85045 Ingolstadt (DE)
(72) Erfinder: ACKERMANN, Jörg, D-72124 Pliezhausen (DE); NEFF, Johann, D-82211 Herrsching (DE)
(74) Vertreter: Engelhardt, Harald
(86) Internationale Anmeldenummer: DE9900171
(87) Internationale Veröffentlichungsnummer: WO99039151

(56) Entgegenhaltungen:
- WO-A-91/06821
- CH-A- 671 989
- DE-A- 4 415 879
- DE-U- 9 215 781
- GB-A- 2 130 073
- US-A- 3 683 828
- US-A- 5 463 929

## Beschreibung

Die Erfindung betrifft ein Panzerungselement, insbesondere für Sicherheitskraftfahrzeuge, deren Karosserieteile in Richtung zum Fahrgastraum mit beschußsicheren Matten oder Formteilen aus Aramidfasern oder anderen Faserverbundwerkstoffen, die als Panzerungsmaterial geeignet sind, ausgekleidet werden. Es sind zahlreiche Lösungen zur Herstellung von Matten oder Formteilen aus faserverstärkten Kunststoffen bekannt, die als Panzerungselement für Sicherheitskraftfahrzeuge Anwendung finden.

In der DE 34 26 458 A1 wird ein Verfahren zur Herstellung von Formteilen aus Aramidgeweben beschrieben, bei dem eine Vielzahl von Lagen von mit Bindemitteln versehenen Aramidfasergeweben in einer Formpresse verpreßt und damit ein Formteil erzeugt wird. Diese Formteile haben den Nachteil, daß in stark gebogenen Bereichen die geforderten ballistischen Eigenschaften nicht mehr gegeben sind, da das Material in diesen stark gebogenen Bereichen beim Auftreffen eines Projektils aufreißt. Weiterhin ist bei Panzerungselementen in Form der Matten und Formteile an den Randbereichen keine genügende Haltbarkeit gegeben, da diese Bereiche beim Auftreffen eines Projektils nachgeben. Bei der Fahrzeuginnenauskleidung mit diesen Panzerungselementen ist es in den meisten Bereichen möglich, durch eine Überlappung der Panzerungselemente das Durchschlagen von Geschossen zu vermeiden.

In dem DE 92 15 781 U1 wird eine Panzerung für Fahrzeuge beschrieben, bei welcher die dem Innenraum des Fahrzeuges zugekehrte Oberfläche zusätzlich zu Panzerplatten aus Panzerstahl mit Gewebematten an Stoßstellen großflächig übergreifend überdeckt ist. Auch die Gewebematten überlappen sich an ihren Stoßstellen. Im Randbereich der Karosserieteile, insbesondere im Bereich von Türen und Fenstern, ist jedoch eine Überlappung der Gewebematten nicht mehr möglich.

Auch in der DE 195 43 127 A1 wird eine Lösung zu beschußsicheren Matten, insbesondere zum Abdecken von Fahrzeugwandungen, beschrieben, bei welcher die beschußsichere Matte aus mehreren, miteinander verbundenen Kunststoff-Gewebeschichten besteht. Auch hierbei ergibt sich das Problem der ungenügenden Steifigkeit der Matten in deren Randbereich.

Es sind weiterhin Panzerungselemente bekannt, die aus verschiedenen Verbundmaterialien bestehen. Dabei wird eine Leichtpanzerung gemäß der DE 43 00 746 A1 in Mehrschichtbauweise aus zwei Panzerungselementen gebildet. Jedes Panzerungselement besteht aus einem Verbund einer Faserverbundschicht und einer hochharten Metallschicht. Diese Metallschicht ist ganzflächig aufgebracht, wodurch sich das Gewicht unnötig erhöht.

Die US-A-5 463 929 offenbart eine verstärkende Einfassung für den Randbereich eines Armierungsmaterials. Dabei ist vorgesehen, daß die Einfassung auf dem Armierungsmaterial aufliegt. Damit soll insbesondere erreicht werden, daß das laminierte Armierungsmaterial beim Auftreffen eines Projektils nicht auseinandergerissen wird. In ähnlicher Weise ist in der GB-A-2 130 073 vorgesehen, daß ein Panzeraufbau dadurch hergestellt wird, daß ein flächiger Aramidplatten-Verbund mit einer Keramik-Platte verklebt wird.

In der US-A-3 683 828 ist eine flächig homogene Panzerung beschrieben. Die Panzerung weist in dieser Schrift einen vollflächigen Verbund einer Keramikplatte mit einem faserverstärkten Laminat auf. Zwischen der Keramikplatte und dem Laminat sind dünne Metallplatten angeordnet, die die Keramikplatte stützen.

Aus der CH-A-671 989 ist eine wärmeisolierende Schutzwand bekannt. Bei dieser sind verstärkte Kunststoffplatten vorgesehen, zwischen denen ein Stützkörper aus Hartschaumplatten angeordnet ist. Zwischen den Hartschaumplatten ist ein perforiertes Blech positioniert. Alle Elemente sind gleichmäßig flächig ausgebildet. Das perforierte Blech kann jedoch keine nennenswerte Menge an Geschoßenergie aufnehmen.

Der Erfindung liegt die Aufgabe zugrunde, ein Panzerungselement für Sicherheitskraftfahrzeuge zu entwickeln, das ein geringes Gewicht aufweist und die Beschußsicherheit in Randbereichen und in stark gebogenen Bereichen gewährleistet.

Diese Aufgabe wird erfindungsgemäß mit den Merkmalen des Patentanspruchs 1 gelöst.

Dabei werden die Randbereiche und/oder die gebogenen Bereiche der aus beschußhemmenden Gewebematten oder Formteilen bestehenden Panzerungselemente erfindungsgemäß mit Elementen versehen, die geeignet sind, die Energie eines Geschosses aufzunehmen. Diese Elemente sind in die Gewebematten oder Formteile eingebettet oder an deren Oberflächen angeordnet. Um die bestmögliche Abwehrwirkung zu erzielen, sollten sie sich weitmöglichst in Schußrichtung befinden.

Die Elemente bestehen vorzugsweise aus Panzerstahl oder aus einer beschußhemmenden Keramik.

Durch die Anordnung der Elemente im Randbereich wird bei den aus faserverstärkten, beschußsicheren Materialien bestehenden Matten und/oder Formteilen im Randbereich die erforderliche Beschußsicherheit gewährleistet, da durch die Kombination mit den aus Panzerstahl oder beschußsicherer Keramik bestehenden Elementen das Eindringen eines Geschosses in den Fahrzeuginnenraum zuverlässig verhindert wird. Durch das Anbringen der Elemente in Bereichen mit kleinen Krümmungen und Radien bei aus faserverstärkten, beschußsicheren Materialien bestehenden Formteilen wird ebenfalls in diesem ansonsten kritischen Bereich der Formteile das Durchschlagen eines Geschosses vermieden. Zur Verbesserung des Verbundes zwischen den faserverstärkten Matten oder Formteilen können die Elemente eine in Richtung zum Faserverbundmaterial rauhe oder mit Aussparungen oder kleinen Durchbrüchen versehene Oberfläche aufweisen.

Durch die nur bereichsweise Anordnung der aus Panzerstahl oder Keramik bestehenden Elementen in den Randbereichen und/oder Radienbereichen wird das Gewicht des Panzerungselementes gegenüber verbundmaterialien mit durchgängiger Metallschicht wesentlich verringert. Dieser Effekt wird durch Elemente mit Aussparungen oder Durchbrüchen weiter erhöht. Gleichzeitig werden die Herstellungskosten der Panzerungselemente verringert.

Die Erfindung wird nachfolgend anhand von Ausführungsbeispielen und zugehörigen Zeichnungen näher erläutert:

Es zeigen:
- Fig. 1: in ein Formteil eingebettetes Element in Form einer Panzerstahleinlage,
- Fig. 2: ein auf der Oberseite eines Formteiles angeordnetes Element in Form einer Stahleinlage,
- Fig. 3: ein Element mit Durchbrüchen,
- Fig. 4: ein als A-Säulenverkleidung ausgebildetes Formteil mit eingebetteten Panzerstahleinlagen und
- Fig. 5: eine Vergrößerung des Ausschnittes b in Fig. 4.

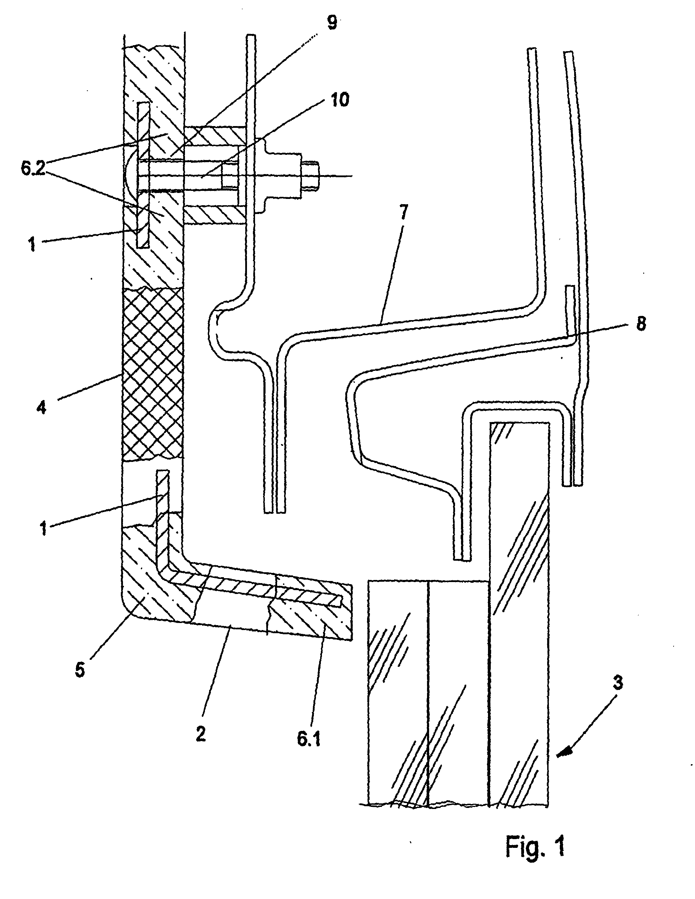

In Fig. 1 ist ein Panzerungselement aus einem Formteil 2 aus beschußsicherem Material, beispielsweise aus Aramidgewebe oder aus einem anderen faserverstärkten, beschußhemmenden Kunststoff, dargestellt. Es gliedert sich in einen geraden oder leicht gebogenen Bereich 4, einen stark gebogenen Bereich 5 und einen Randbereich 6.1 in Richtung zur in der Fahrzeugtür 8 angeordneten Scheibe 3, sowie einen Randbereich 6.2 im Bereich des Durchbruchs 9 für die Befestigung 10 des Formteils 2 an der Säule 7 oder an einem anderen Karosserieteil. Vom Randbereich 6.1 erstreckt sich über den stark gebogenen Bereich 5 ein Element 1 in Form einer Panzerstahleinlage. Ein weiteres Element 1 in Form einer Scheibe aus Panzerstahl ist im Randbereich 6.2 des Durchbruchs 9 des Panzerungselementes vorgesehen.

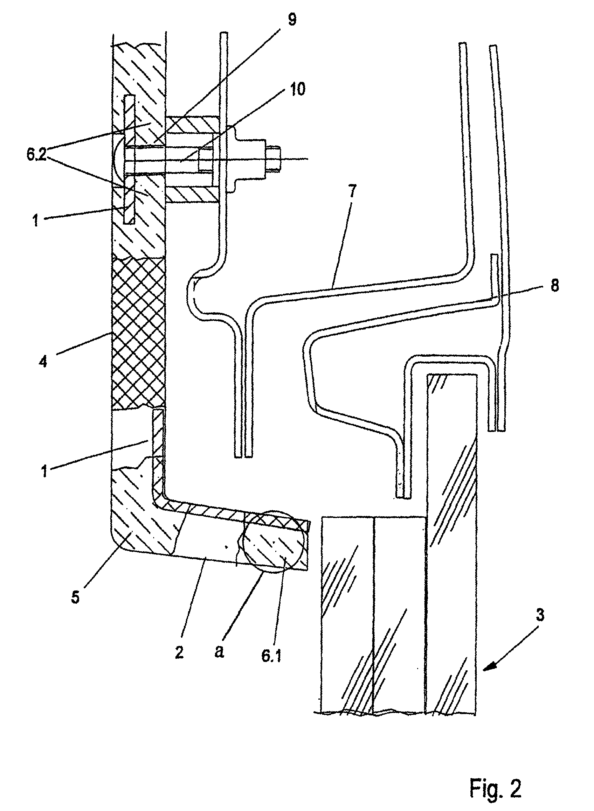

In Fig. 2 ist ein Panzerungselement dargestellt, bei welchem das im Bereich 6.1 angeordnete Element 1 an der in Richtung zur Tür 8 bzw. zur Säule 7 (oder zum Rahmen) weisenden Oberseite angeordnet ist.

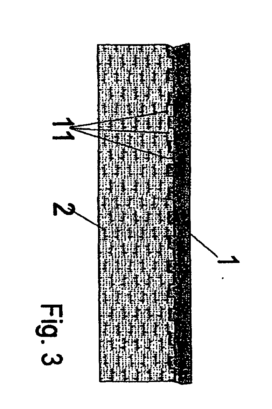

Den Ausschnitt a gemäß Fig. 2 zeigt Fig. 3, wobei in diesem Beispiel in der sich in Richtung zum faserverstärkten beschußsicheren Gewebeformteil weisenden Fläche des aus Panzerstahl bestehenden Elements 1 Aussparungen 11 angeordnet sind, in welche beim Umformvorgang zur Herstellung der Formteile der faserverstärkte Werkstoff bzw. Gewebewerkstoff eingepreßt wurde. Dadurch wird ein besserer Verbund zwischen diesen Bauteilen erzeugt.

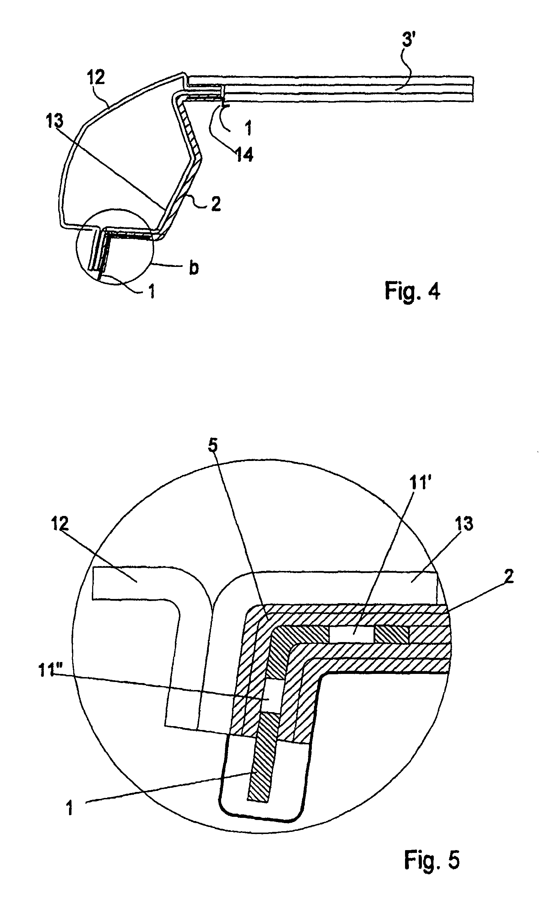

Es ist auch möglich, anstelle der Aussparungen 11 viele kleine Durchbrüche - gegebenenfalls mehrere Lochreihen 11' und 11" - in einem Element 1 anzuordnen, wie dies beispielhaft den Fig. 4 und 5 entnehmbar ist. Das Formteil 2 ist bei diesem Ausführungsbeispiel einem Innenblech 12 zugeordnet, das zusammen mit einem Außenblech 13 beispielsweise eine A-Säule bildet. Die Einbettung des Elements 1 muß nicht immer vollständig sein. So wird beispielweise für das einer Frontscheibe 3' zugewandte Element 1' eine aus der Formteilkontur heraustretende Abwinklung vorgeschlagen, die eine Rückverlegung des Formteils 2 von der Frontscheibe 3' weg ermöglicht.

Vorteilhafterweise ist das Panzerungselement mit einem Serienstoffüberzug 15 umschlossen. Von außen durch die Frontscheibe 3' betrachtet, wirkt das Formteil 2 dann wie ein ungepanzertes Verkleidungsteil aus der Serienfertigung des entsprechenden Fahrzeuges. Weiterhin können neben Panzerstahl oder beschußsicherer Keramik für das bzw. die Element(e) 1 auch andere Materialien eingesetzt werden, die geeignet sind, die Energie eines Geschosses aufzunehmen.

Günstig ist es auch, wenn das bzw. die Element(e) 1 mit Durchbrüchen versehen ist bzw. sind oder an ihrer in Richtung zum Panzerungselement weisenden Oberfläche einoder beidseitig Aussparungen aufweist bzw. aufweisen und/oder ein- oder beidseitig eine rauhe Oberfläche aufweist bzw. aufweisen. Insbesondere können das bzw. die Element(e) (1) viele kleine Durchbrüche und/oder Aussparungen aufweisen.

Bevorzugt sind die Durchbrüche oder Aussparungen so dimensioniert, daß sie die Abwehrkraft gegen Geschosse nicht oder nur unwesentlich beeinflussen.

Günstig ist es auch, daß das bzw. die Element(e) 1 in die Gewebematten oder Formteile 2 aus deren Konturen zumindest partiell heraustretend eingebettet ist bzw. sind.

Ferner ist es vorteilhaft, wenn der partiell aus den Konturen der Gewebematten oder Formteile 2 heraustretende Bereich des bzw. der Elements(e) 1 mit elastischem Material ummantelt ist.

Bevorzugt ist der heraustretende Bereich des bzw. der Elements(e) 1 mit elastischem Kunststoff oder Gummi ummantelt.

## Patentansprüche

1. Panzerungselement, insbesondere für Sicherheitskraftfahrzeuge, wobei das Panzerungselement aus beschußhemmenden Gewebematten oder Formteilen (2) besteht, **dadurch gekennzeichnet, daß** nur die Randbereiche (6.1, 6.2) des Panzerungselements und/oder nur dessen gebogenen Bereiche (5) mit mindestens einem Element (1) versehen sind, das geeignet ist, die Energie eines Geschosses aufzunehmen, wobei das bzw. die Element(e) (1) in die Gewebematten oder Formteile (2) eingebettet oder an deren Oberfläche konturbündig angeordnet ist bzw. sind.

2. Panzerungselement nach Anspruch 1, **dadurch gekennzeichnet, daß** das bzw. die in die Gewebematten oder Formteile (2) eingebettete(n) Element(e) (1) weitmöglichst in Schußrichtung angeordnet ist bzw. sind.

3. Panzerungselement nach Anspruch 1, **dadurch gekennzeichnet, daß** das bzw. die an der Oberfläche des Panzerungselements angeordnete(n) Element(e) (1) an der in Richtung zu den Karosserieteilen weisenden Oberfläche angeordnet ist bzw. sind.

4. Panzerungselement nach einem der Ansprüche 1 bis 3, **dadurch gekennzeichnet, daß** das bzw. die Element(e) (1) aus Panzerstahl oder beschußhemmender Keramik besteht bzw. bestehen.

5. Panzerungselement nach einem der Ansprüche 1 bis 4, **dadurch gekennzeichnet, daß** das bzw. die Element(e) (1)
- mit Durchbrüchen versehen ist bzw. sind oder
- an seiner bzw. ihrer in Richtung zum Panzerungselement weisenden Oberfläche ein- oder beidseitig Aussparungen (11)
und/oder
- ein- oder beidseitig eine rauhe Oberfläche aufweist bzw. aufweisen.

6. Panzerungselement nach Anspruch 5, **dadurch gekennzeichnet, daß** das bzw. die Element(e) (1) viele kleine Durchbrüche und/oder Aussparungen (11) aufweist bzw. aufweisen.

7. Panzerungselement nach Anspruch 5 oder 6, **dadurch gekennzeichnet, daß** die Durchbrüche oder Aussparungen (11) so dimensioniert sind, daß sie die Abwehrkraft gegen Geschosse nicht oder nur unwesentlich beeinflussen.

8. Panzerungselement nach einem der Ansprüche 1 bis 7, **dadurch gekennzeichnet, daß** das bzw. die Element(e) (1) in die Gewebematten oder Formteile (2) aus deren Konturen zumindest partiell heraustretend eingebettet ist bzw. sind.

9. Panzerungselement nach Anspruch 8, **dadurch gekennzeichnet, daß** der partiell aus den Konturen der Gewebematten oder Formteile (2) heraustretende Bereich des bzw. der Elements(e) (1) mit elastischem Material ummantelt ist.

10. Panzerungselement nach Anspruch 9, **dadurch gekennzeichnet, daß** der heraustretende Bereich des bzw. der Elements(e) (1) mit elastischem Kunststoff oder Gummi ummantelt ist.

11. Panzerungselement nach einem der Ansprüche 1 bis 10, **dadurch gekennzeichnet, daß** es durch einen Serienstoffüberzug (15) umschlossen ist.

## Claims

1. An armouring element, in particular for security vehicles, the armouring element being made of bullet-proof woven mats or shaped parts (2), **characterized in that** only the peripheral regions (6.1, 6.2) of the armouring element and/or only its curved regions (5) are provided with at least one element (1), which is capable of absorbing the energy of a bullet, the element or elements (1) being embedded in the woven mats or shaped parts (2) or being disposed on the surface of said woven mats or shaped parts (2) in such a way as to lie flush with their contours.

2. An armouring element according to Claim 1, **characterized in that** the element or elements (1) embedded in the woven mats or shaped parts (2) is or are, as far as possible, disposed in the line of fire.

3. An armouring element according to Claim 1, **characterized in that** the element or elements (1) disposed on the surface of the armouring element is or are disposed on the surface pointing towards the bodywork components.

4. An armouring element according to one of Claims 1 to 3, **characterized in that** the element or elements (1) is or are made of armour steel or of bullet-proof ceramic.

5. An armouring element according to one of Claims 1 to 4, **characterized in that** the element or elements (1)
- is or are provided with openings, or
- has or have recesses (11) on one or both sides of its or their surface pointing towards the armouring element
and/or
- has or have a rough surface on one or both sides.

6. An armouring element according to Claim 5, **characterized in that** the element or elements (1) has or have many small openings and/or recesses (11).

7. An armouring element according to Claim 5 or 6, **characterized in that** the openings or recesses (11) are of such a size that they do not affect, or only negligibly affect, the resistance to bullets.

8. An armouring element according to one of Claims 1 to 7, **characterized in that** the element or elements (1) is or are embedded in the woven mats or shaped parts (2) so as at least partly to protrude from their contours.

9. An armouring element according to Claim 8, **characterized in that** the region of the element or elements (1) partly protruding from the contours of the woven mats or shaped parts (2) is encased in flexible material.

10. An armouring element according to Claim 9, **characterized in that** the protruding region of the element or elements (1) is encased in flexible plastic or rubber.

11. An armouring element according to one of Claims 1 to 10, **characterized in that** it is enclosed by a covering (15) of mass-produced material.

## Revendications

1. Élément de blindage, en particulier pour véhicules de sécurité, l'élément de blindage étant formé de matelas tissés ou de pièces profilées (2) entravant l'action d'un tir, **caractérisé en ce que** seules les zones de bordure (6.1, 6.2) de l'élément de blindage et/ou seules ses zones coudées (5) sont munies d'au moins un élément (1) convenant pour capter l'énergie d'un projectile, le ou les élément(s) (1) est, respectivement sont, incorporé(s) dans les matelas tissés ou les pièces profilées (2) ou disposé(s), sur leur surface, en affleurement de leur contour.

2. Élément de blindage selon la revendication 1, **caractérisé en ce que** le, respectivement les, élément(s) (1), incorporé(s) dans les matelas tissés ou les pièces profilées (2), est, respectivement sont, disposé(s) aussi loin que possible dans la direction du tir.

3. Élément de blindage selon la revendication 1, **caractérisé en ce que** le, respectivement les, élément(s) (1) disposé(s) sur la surface de l'élément de blindage est, respectivement sont, disposé(s) sur la surface tournée en direction des éléments de carrosserie.

4. Élément de blindage selon l'une des revendications 1 à 3, **caractérisé en ce que** le, respectivement les, élément(s) (1) est, respectivement sont, formé(s) d'acier de blindage, ou bien d'une céramique entravant l'effet d'un tir.

5. Élément de blindage selon l'une des revendications 1 à 4, **caractérisé en ce que** le, respectivement les, élément(s) (1)
- est, respectivement, sont muni(s) de traversées ou
- présente, respectivement présentent, sur son, respectivement leurs, surface(s) toumée(s) dans la direction de l'élément de blindage, des évidements (11) sur un ou deux côtés
et/ou
- une surface rugueuse, sur un ou deux côté(s).

6. Élément de blindage selon la revendication 5, **caractérisé en ce que** le, respectivement les, élément(s) (1) présente, respectivement présentent, une pluralité de petites traversées et/ou évidements (11).

7. Élément de blindage selon la revendication 5 ou 6, **caractérisé en ce que** les traversées ou évidements (11) sont dimensionnés de manière à ne pas influer, ou bien de façon non essentielle, sur la force de défense contre les projectiles.

8. Élément de blindage selon l'une des revendications 1 à 7, **caractérisé en ce que** le, respectivement les, élément(s) (1) est, respectivement sont, incorporé(s) dans les matelas tissés ou les pièces profilées (2), en ressortant au moins partiellement de leurs contours.

9. Élément de blindage selon la revendication 8, **caractérisé en ce que** la zone, ressortant partiellement des contours des matelas tissés ou des pièces profilées (2), du respectivement, des élément(s) (1) est enveloppée d'un matériau élastique.

10. Élément de blindage selon la revendication 9, **caractérisé en ce que** la zone, ressortant, du, respectivement des, élément(s) (1), est enveloppée d'une matière synthétique élastique ou de caoutchouc.

11. Élément de blindage selon l'une des revendications 1 à 10, **caractérisé en ce qu'**il est enfermé par un revêtement de matériaux de série (15).
